# EUROPEAN PATENT APPLICATION

(11) **EP 4 024 367 A1**
(43) Date of publication of application: **06.07.2022**
(21) Application number: 21212607.2
(22) Date of filing: 06.12.2021
(51) Int. Cl.: G08G 1/16, B60W 30/06, B62D 15/02, G06V 20/58

(54) **METHOD AND APPARATUS OF AUTOMATIC PARKING OF VEHICLE, VEHICLE AND STORAGE MEDIUM**

(30) Priority: 30.12.2020 CN 202011631560
(71) Applicant: Guangzhou Xiaopeng Autopilot Technology Co., Ltd., Guangzhou, Guangdong 510725 (CN)
(72) Inventor: SU, Jingren, Guangzhou, 510725 (CN); XU, Yang, Guangzhou, 510725 (CN); HUANG, Yubo, Guangzhou, 510725 (CN); CHEN, Shengjun, Guangzhou, 510725 (CN)
(74) Representative: Isarpatent

(57) **Abstract**

The embodiments of the present disclosure provide a method and apparatus of automatic parking of a vehicle, a vehicle and a storage medium. The method includes: during travelling of the vehicle, determining the available parking space within the parking area, detecting the available parking spaces one by one periodically to determine a candidate parking space; after the detection on the available parking space has been completed within a current period, determining a detection duration; if the detection duration is less than a preset duration, continuing detecting a next available parking space within the current period; and if the detection duration is greater than or equal to the preset duration, after the current period ends, starting a next period, to continue detecting a next available parking space.

## Description

### TECHNICAL FIELD

The present disclosure relates to the technical field of intelligent vehicles, and particularly relates to a method and apparatus of automatic parking of a vehicle, a vehicle and a storage medium.

### BACKGROUND

With the development of electric and electronic technology, vehicles are being increasingly intellectualized, and increasingly more intelligent driving functions appear in vehicles to bring convenience to drivers. Especially, automatic parking systems, which have already been used in vehicles, may facilitate drivers to complete the parking operation quickly and safely, thereby alleviating the burden on the drivers and reducing traffic accidents, and may also effectively increase the degree of intellectualization of the vehicles and increase the additional value of the vehicles, thereby bringing a huge economic benefit.

The conventional automatic parking systems, in the process of searching for the available candidate parking spaces, periodically determine whether parking spaces around the vehicle is available, i.e., it detects the first parking space within the first period, and detects the second parking space within the second period, and then determines all of the available parking spaces around the vehicle until all of the parking spaces around the vehicle have been completely detected. However, in such a solution, although some parking spaces can be detected quickly, the next parking spaces cannot be detected until the second period is entered after the current period ends, which results in that, in the process of searching for the candidate parking space for the vehicle, the searching duration is waste, and the available candidate parking space is seized by another vehicle, which brings the user a negative parking experience.

### SUMMARY

In view of the above problems, the embodiments of the present disclosure are provided to provide a method and apparatus of automatic parking of a vehicle, a vehicle and a storage medium that overcome the above problems or at least partially solve the above problems.

In order to solve the above problems, an embodiment of the present disclosure discloses a method of automatic parking of a vehicle, wherein the method includes:
during travelling of the vehicle, determining available parking spaces within a parking area of the vehicle;
detecting the available parking spaces one by one periodically to determine a candidate parking space;
after the detection on the available parking space has been completed within a current period, determining a detection duration;
if the detection duration is less than a preset duration, continuing detecting a next available parking space within the current period; and
if the detection duration is greater than or equal to the preset duration, after the current period ends, starting a next period, to continue detecting a next available parking space.
Preferably, the step of detecting the available parking spaces one by one periodically to determine the candidate parking space includes:
acquiring first parking space-position information of the available parking space and first vehicle-position information of the vehicle;
according to the first parking space-position information and the first vehicle-position information, planning a first parking path corresponding to the available parking space; and
if the planning of the first parking path succeeds, determining the available parking space as the candidate parking space, recording the first vehicle-position information as a buffer point, and recording the first parking path as a memorized parking path.

Preferably, the first parking space-position information includes a first parking space entrance width, and after the step of detecting the available parking spaces one by one periodically to determine the candidate parking space, the method further includes:
acquiring second parking space-position information of the candidate parking space and second vehicle-position information of the vehicle, wherein the second parking space-position information includes a second parking space entrance width;
determining whether a difference between the first parking space entrance width and the second parking space entrance width is less than a preset threshold; and
if the difference between the first parking space entrance width and the second parking space entrance width is less than the preset threshold, maintaining the candidate parking space.

Preferably, after the step of determining whether the difference between the first parking space entrance width and the second parking space entrance width is less than the preset threshold, the method further includes:
if the difference between the first parking space entrance width and the second parking space entrance width is greater than or equal to the preset threshold, checking the memorized parking path, and if the memorized parking path is effective, maintaining the candidate parking space;
if the memorized parking path fails, according to the buffer point and the second parking space-position information of the candidate parking space, planning a second parking path corresponding to the candidate parking space;
if the planning of the second parking path corresponding to the candidate parking space succeeds, maintaining the candidate parking space, and recording the second parking path as the memorized parking path; and
if the planning of the second parking path corresponding to the candidate parking space fails, deleting the candidate parking space, using the candidate parking space as the available parking space, using the second parking space-position information as the first parking space-position information, using the second vehicle-position information as the first vehicle-position information, and returning to execute the step of, according to the first parking space-position information and the first vehicle-position information, planning the first parking path corresponding to the available parking space.

Preferably, the candidate parking space is displayed by an onboard device of the vehicle, and after the step of detecting the available parking spaces one by one periodically to determine the candidate parking space, the method further includes:
in response to an operation instruction sent from the user to operate the onboard device, determining a target parking space from the candidate parking spaces;
acquiring third vehicle-position information of the vehicle and third parking space-position information of the target parking space; and
according to the third parking space-position information and the third vehicle-position information, planning a third parking path corresponding to the target parking space, and parking the vehicle according to the third parking path.

Preferably, the method further includes:
if the planning of the third parking path fails, according to the third vehicle-position information, the buffer point and the third parking space-position information, planning a fourth parking path corresponding to the target parking space, and parking the vehicle according to the fourth parking path; and
if the planning of the fourth parking path fails, parking the vehicle according to the memorized parking path.

Preferably, the first parking space-position information includes a first parking space position and a first course angle, and the memorized parking path is recorded as the first parking space position, the first course angle, a curvature, and a length of the memorized parking path.

An embodiment of the present disclosure discloses an apparatus of automatic parking of a vehicle, wherein the apparatus includes:
an available parking space determining module configured for, during travelling of the vehicle, determining available parking spaces within a parking area of the vehicle;
a candidate-parking space determining module configured for detecting the available parking spaces one by one periodically to determine a candidate parking space;
a detection-duration determining module configured for, after the detection on the available parking space has been completed within a current period, determining a detection duration;
an available parking space detecting module configured for, if the detection duration is less than a preset duration, continuing detecting a next available parking space within the current period; and
a current-period ending module configured for, if the detection duration is greater than or equal to the preset duration, after the current period ends, starting a next period, to continue detecting a next available parking space.

Preferably, the candidate-parking space determining module includes:
a position-information acquiring submodule configured for acquiring first parking space-position information of the available parking space and first vehicle-position information of the vehicle;
a parking-path planning submodule configured for, according to the first parking space-position information and the first vehicle-position information, planning a first parking path corresponding to the available parking space; and
a parking-path memorizing submodule configured for, if the planning of the first parking path succeeds, determining the available parking space as the candidate parking space, recording the first vehicle-position information as a buffer point, and recording the first parking path as a memorized parking path.

Preferably, the apparatus further includes:
a first position-information acquiring module configured for acquiring second parking space-position information of the candidate parking space and second vehicle-position information of the vehicle, wherein the second parking space-position information includes a second parking space entrance width;
an entrance-width determining module configured for determining whether a difference between the first parking space entrance width and the second parking space entrance width is less than a preset threshold; and
a candidate-parking space maintaining module configured for, if the difference between the first parking space entrance width and the second parking space entrance width is less than the preset threshold, maintaining the candidate parking space.

Preferably, after the entrance-width determining module, the apparatus further includes:
a parking-path checking module configured for, if the difference between the first parking space entrance width and the second parking space entrance width is greater than or equal to the preset threshold, checking the memorized parking path, and if the memorized parking path is effective, maintaining the candidate parking space;
a first parking-path planning module configured for, if the memorized parking path fails, according to the buffer point and the second parking space-position information of the candidate parking space, planning a second parking path corresponding to the candidate parking space;
a parking-path memorizing module configured for, if the planning of the second parking path corresponding to the candidate parking space succeeds, maintaining the candidate parking space, and recording the second parking path as the memorized parking path; and
a candidate-parking space deleting module configured for, if the planning of the second parking path corresponding to the candidate parking space fails, deleting the candidate parking space, using the candidate parking space as the available parking space, using the second parking space-position information as the first parking space-position information, using the second vehicle-position information as the first vehicle-position information, and returning to execute the step of, according to the first parking space-position information and the first vehicle-position information, planning the first parking path corresponding to the available parking space.

Preferably, the candidate parking space is displayed by an onboard device of the vehicle, the apparatus further includes:
a target-parking space determining module configured for, in response to an operation instruction sent from the user to operate the onboard device, determining a target parking space from the candidate parking spaces;
a second position-information acquiring module configured for acquiring third vehicle-position information of the vehicle and third parking space-position information of the target parking space; and
a second parking-path planning module configured for, according to the third parking space-position information and the third vehicle-position information, planning a third parking path corresponding to the target parking space, and parking the vehicle according to the third parking path.

Preferably, the apparatus further includes:
a third parking-path planning module configured for, if the planning of the third parking path fails, according to the third vehicle-position information, the buffer point and the third parking space-position information, planning a fourth parking path corresponding to the target parking space, and parking the vehicle according to the fourth parking path; and
a memorized-parking-path parking module configured for, if the planning of the fourth parking path fails, parking the vehicle according to the memorized parking path.

Preferably, the first parking space-position information includes a first parking space position and a first course angle, and the memorized parking path is recorded as the first parking space position, the first course angle, a curvature, and a length of the memorized parking path.

An embodiment of the present disclosure discloses a vehicle, wherein the vehicle includes a processor, a memory and a computer program that is stored in the memory and is executable in the processor, and the computer program, when executed by the processor, implements the steps of the method of automatic parking of a vehicle stated above.

An embodiment of the present disclosure discloses a computer-readable storage medium, wherein the computer-readable storage medium stores a computer program, and the computer program, when executed by a processor, implements the steps of the method of automatic parking of a vehicle stated above.

The embodiments of the present disclosure have advantages as follows.

The embodiments of the present disclosure comprise, during travelling of the vehicle, determining the available parking space within the parking area, detecting the available parking spaces one by one periodically to determine a candidate parking space; after the detection on the available parking space has been completed within a current period, determining a detection duration; if the detection duration is less than a preset duration, continuing detecting a next available parking space within the current period; and if the detection duration is greater than or equal to the preset duration, after the current period ends, starting a next period, to continue detecting a next available parking space. In the embodiments of the present disclosure, by determining the detection duration in the detection on the available parking space, and, when the detection duration is less than the preset duration, continuing detecting the next available parking space within the current period, the duration of the detection on the available parking space may be reduced, and more available parking spaces may be detected within equal duration, to prevent the available candidate parking space from being seized by another vehicle due to the waste of the detection duration, and to bring an excellent parking experience to the user.

### BRIEF DESCRIPTION OF THE DRAWINGS

FIG. 1 is a flow chart of the steps of an embodiment of the method of automatic parking of a vehicle according to the present disclosure;
FIG. 2 is a schematic diagram of the available parking space detection circulation according to the present disclosure;
FIG. 3 is a flow chart of the steps of another embodiment of the method of automatic parking of a vehicle according to the present disclosure;
FIG. 4 is a schematic diagram of the candidate-parking space searching according to the present disclosure; and
FIG. 5 is a structural block diagram of an embodiment of the apparatus of automatic parking of a vehicle according to the present disclosure.

### DETAILED DESCRIPTION

In order to make the above purposes, features and advantages of the present disclosure more apparent and understandable, the present disclosure will be described in further detail below with reference to the drawings and the particular embodiments.

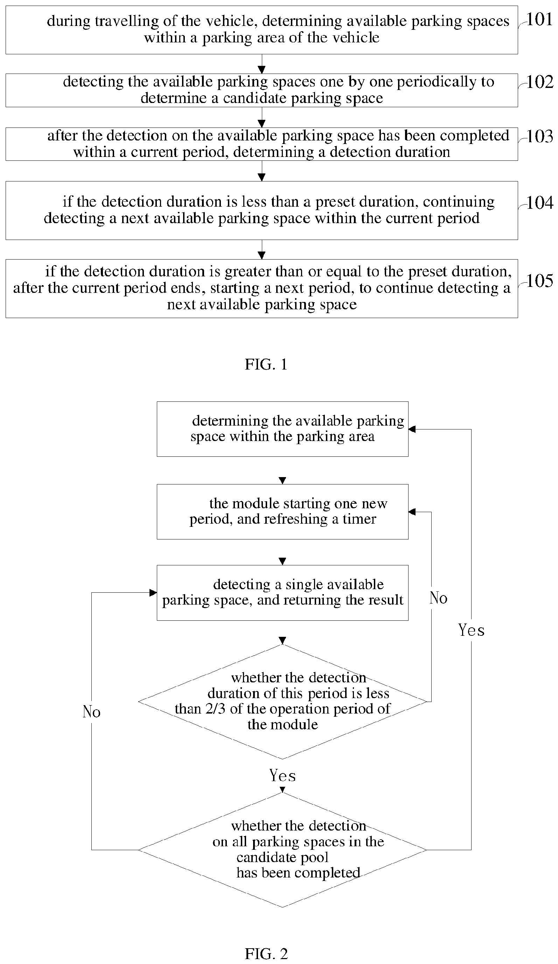

Referring to FIG. 1, FIG. 1 shows a flow chart of the steps of an embodiment of the method of automatic parking of a vehicle according to the present disclosure. The embodiment of the present disclosure may particularly comprise the following steps:

Step 101: during travelling of the vehicle, determining available parking spaces within a parking area of the vehicle.

The parking area refers to the area preset for the vehicle that may be used for parking, wherein the vehicle can detect the parking spaces within the area by using a sensing device and a shooting device. The available parking space refers to the parking spaces that may park vehicles within the parking area, and the available parking space refers to a parking space that is not occupied by a vehicle or an obstacle.

Particularly, during the travelling of the vehicle, a parking space existing within the parking area of the vehicle is detected, and whether an obstacle or a vehicle exists in the parking space is also determined. If an obstacle or a vehicle exists, then the parking space is an unavailable parking space. If no obstacle or vehicle exists in the parking space, then it is determined that the parking space is an available parking space. Therefore, all of the available parking spaces within the parking area are determined.

Step 102: detecting the available parking spaces one by one periodically to determine a candidate parking space.

Particularly, after all of the available parking spaces within the parking area have been determined, it is started to poll and detect all of the available parking spaces within the parking area one by one periodically, wherein, for example, the duration of each of the periods is 100ms, till all of the available parking spaces within the parking area have been completely polled and detected, to determine a candidate parking space.

Step 103: after the detection on the available parking space has been completed within a current period, determining a detection duration.

Particularly, after the detection on the available parking space has been completed within the current period, the detection duration of the detection on the available parking space is determined.

Step 104: if the detection duration is less than a preset duration, continuing detecting a next available parking space within the current period.

Particularly, this step includes, after the detection on the available parking space within the current period has been completed and the detection duration of the detection on the available parking space has been determined, determining whether the duration of the detection on the available parking space is less than a preset duration, and if the detection duration is less than the preset duration, then continuing detecting the next available parking space within the current period. For example, if the period duration is 100ms, the detection duration is 50ms, and the preset duration is 66.6ms, then the detection duration 50ms is less than the preset duration 66.6ms, which indicates that the current period has much remaining duration, and therefore it is allowable to detect the next available parking space within the current period.

In an example, this step includes, if, within one period, after the available parking space has been detected, the detection duration is less than the preset duration, continuing detecting the next available parking space within the same one period, and if the detection on the next available parking space has not been completed when the period duration ends, prolonging the duration of the current period, till the detection on the next available parking space has been completed, and ending the current period.

The embodiment of the present disclosure, by determining the detection duration in the detection on the available parking space, and, when the detection duration is less than the preset duration, continuing detecting the next available parking space within the current period, it is capable to reduce the duration of the detection on the available parking space, and detect more available parking spaces within equal duration, to prevent the available candidate parking space from being seized by another vehicle due to the waste of the detection duration, and to bring an excellent parking experience to the user.

Step 105: if the detection duration is greater than or equal to the preset duration, after the current period ends, starting a next period, to continue detecting a next available parking space.

Particularly, this step includes, after the detection on the available parking space within the current period has been completed and the detection duration of the detection on the available parking space has been determined, determining whether the duration of the detection on the available parking space is less than a preset duration, and if the detection duration is greater than or equal to the preset duration, which indicates that the remaining duration of the current period is insufficient to detect the next available parking space, waiting till the duration of the current period ends, and starting a next period, to continue detecting the next available parking space.

In order to better comprehend the embodiments of the present disclosure, FIG. 2 may be referred to. FIG. 2 is a schematic diagram of the available parking space detection circulation according to the present disclosure. It can be known from the figure that, after the available parking spaces within the parking area have been determined, the module starts one new period, refreshes a timer, and detects a certain available parking space; after the detection on the available parking space has been completed, the module determines whether the detection duration is less than 2/3 of the duration of the operation period of the module; if the detection duration is less than 2/3 of the duration of the operation period of the module, and the detection on the available parking spaces within the parking area has not been completed, then the module continues detecting the next available parking space within the current period; and if the detection duration is greater than or equal to 2/3 of the duration of the operation period of the module, the module waits till the duration of the current period ends, and starts a next period, to continue detecting the next available parking space.

In conclusion, the embodiments of the present disclosure comprise, during travelling of the vehicle, determining the available parking space within the parking area, detecting the available parking spaces one by one periodically to determine a candidate parking space; after the detection on the available parking space has been completed within a current period, determining a detection duration; if the detection duration is less than a preset duration, continuing detecting a next available parking space within the current period; and if the detection duration is greater than or equal to the preset duration, after the current period ends, starting a next period, to continue detecting a next available parking space. The embodiments of the present disclosure, by determining the detection duration in the detection on the available parking space, and, when the detection duration is less than the preset duration, continuing detecting the next available parking space within the current period, can reduce the duration of the detection on the available parking space, and detect more available parking spaces within equal duration, to prevent the available candidate parking space from being seized by another vehicle due to the waste of the detection duration, to bring an excellent parking experience to the user.

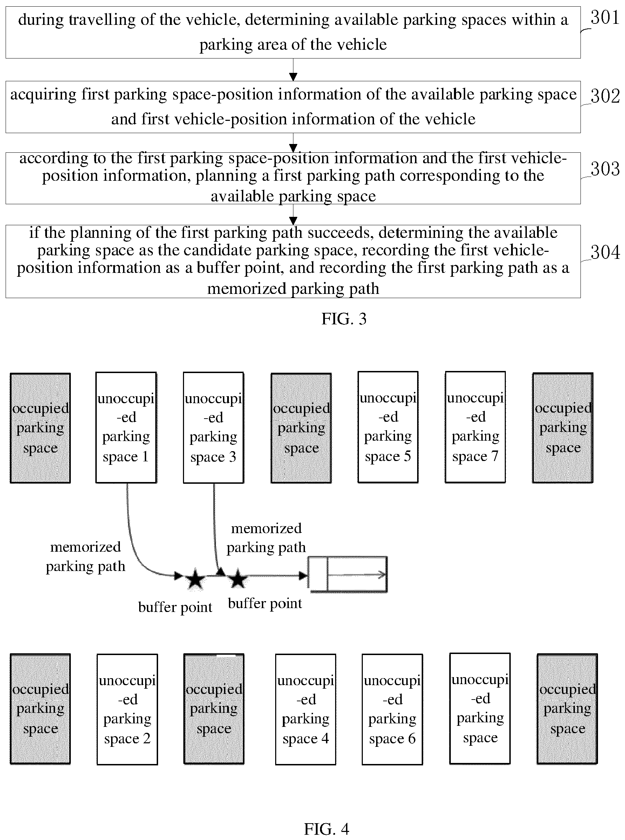

Referring to FIG. 3, FIG. 3 shows a flow chart of the steps of another embodiment of the method of automatic parking of a vehicle according to the present disclosure. The embodiment of the present disclosure may particularly comprise the following steps:

Step 301: during travelling of the vehicle, determining available parking spaces within a parking area of the vehicle.

Step 302: acquiring first parking space-position information of the available parking space and first vehicle-position information of the vehicle.

The first parking space-position information refers to coordinates of four corner points of a parking space block of the available parking space, and the first vehicle-position information refers to a pose of the vehicle at the current moment, wherein the pose includes the position, the course angle, and so on, of the vehicle.

Particularly, after all of the available parking spaces within the parking area have been determined, it is started to poll and detect all of the available parking spaces within the parking area periodically, and when a certain one of the available parking spaces is polled, the first parking space-position information of the available parking space and the first vehicle-position information of the vehicle at the current moment are acquired.

Step 303: according to the first parking space-position information and the first vehicle-position information, planning a first parking path corresponding to the available parking space.

Particularly, when a certain one of the available parking spaces within the parking area is polled, after the first parking space-position information of the available parking space and the first vehicle-position information of the vehicle at the current moment haven been acquired, according to the first parking space-position information and the first vehicle-position information, and environmental information of the available parking space and condition of the path between the available parking space and the vehicle, a first parking path corresponding to the available parking space is planned.

Step 304: if the planning of the first parking path succeeds, determining the available parking space as the candidate parking space, recording the first vehicle-position information as a buffer point, and recording the first parking path as a memorized parking path.

Particularly, this step includes, if the planning of the first parking path succeeds, determining the available parking space as the candidate parking space, and recording the first vehicle-position information as a buffer point. Referring to FIG. 4, FIG. 4 shows a schematic diagram of the candidate-parking space searching according to the present disclosure (the unoccupied parking spaces in the figure are the available parking spaces). It can be known from the figure that, after the available parking spaces within the parking area have been determined, the parking path is planned with respect to the available parking spaces within the parking area of the vehicle; and if the planning succeeds, the available parking space with respect to whom the planning of the parking path succeeds is determined as the candidate parking space, the current vehicle-position information of the candidate parking space is recorded as the buffer point, and the parking path is recorded as the memorized parking path.

In an embodiment of the present disclosure, the first parking space-position information includes a first parking space entrance width, and after the step of detecting the available parking spaces one by one periodically to determine the candidate parking space, the method further includes: acquiring second parking space-position information of the candidate parking space and second vehicle-position information of the vehicle, wherein the second parking space-position information includes a second parking space entrance width; determining whether a difference between the first parking space entrance width and the second parking space entrance width is less than a preset threshold; and if the difference between the first parking space entrance width and the second parking space entrance width is less than the preset threshold, maintaining the candidate parking space.

The parking space-position information refers to the coordinates of the four corner points of the parking space block, and, according to the coordinates of the four corner points, the parking space entrance width can be obtained. Because, when the vehicle is at different positions, the angles of the scanning of the same one parking space are different, which results in that the parking space-position information has a deviation when the vehicle are at different positions, the acquired parking space entrance width varies with the movement of the vehicle. The preset threshold is a value of the parking space entrance width that is set in advance and varies reasonably during the movement of the vehicle; for example, the preset threshold may be set to be 5cm.

Particularly, the method includes, after detecting the available parking spaces one by one periodically and determining the candidate parking space, starting the polling and detection on the candidate parking space for the second time, acquiring the second vehicle-position information of the vehicle and the second parking space-position information of the candidate parking space at the current moment, and determining whether the difference between the first parking space entrance width and the second parking space entrance width is less than a preset threshold; and if the difference between the first parking space entrance width and the second parking space entrance width is less than the preset threshold, determining that the candidate parking space is still effective, and maintaining the candidate parking space.

In an embodiment of the present disclosure, after the step of determining whether the difference between the first parking space entrance width and the second parking space entrance width is less than the preset threshold, the method further includes: if the difference between the first parking space entrance width and the second parking space entrance width is greater than or equal to the preset threshold, checking the memorized parking path, and if the memorized parking path is effective, maintaining the candidate parking space; if the memorized parking path fails, according to the buffer point and the second parking space-position information of the candidate parking space, planning a second parking path corresponding to the candidate parking space; if the planning of the second parking path corresponding to the candidate parking space succeeds, maintaining the candidate parking space, and recording the second parking path as the memorized parking path; and if the planning of the second parking path corresponding to the candidate parking space fails, deleting the candidate parking space, using the candidate parking space as the available parking space, using the second parking space-position information as the first parking space-position information, using the second vehicle-position information as the first vehicle-position information, and returning to execute the step of, according to the first parking space-position information and the first vehicle-position information, planning the first parking path corresponding to the available parking space.

Particularly, after determining whether the difference between the first parking space entrance width and the second parking space entrance width is less than the preset threshold, if the difference between the first parking space entrance width and the second parking space entrance width is greater than or equal to the preset threshold, that indicates that an emergency emerges, which results in that the environment of the candidate parking space or the parking path has changed. For example, another vehicle is parking into or has already parked into the candidate parking space, the candidate parking space suddenly has an obstacle, or a vehicle, pedestrian or obstacle exists in the path between the vehicle and the candidate parking space, which results in that the candidate parking space might be incapable of parking. Therefore, it is required to determine further, check the memorized parking path according to acquired road-condition information and candidate-parking space information, and if the checking shows that the memorized parking path is effective, maintain the candidate parking space.

The method further includes, if the checking shows that the memorized parking path fails, according to the first vehicle-position information and the second parking space-position information of the candidate parking space, detecting the candidate parking space, and re-planning the second parking path corresponding to the candidate parking space; and if the planning of the second parking path corresponding to the candidate parking space succeeds, determining that the candidate parking space is still effective, maintaining the candidate parking space, and recording the second parking path as the memorized parking path.

The method further includes, if the planning of the second parking path corresponding to the candidate parking space fails, deleting the candidate parking space, using the candidate parking space as the available parking space, using the second parking space-position information as the first parking space-position information, using the second vehicle-position information as the first vehicle-position information, and returning to execute the step of, according to the first parking space-position information and the first vehicle-position information, determining the candidate parking space from the available parking spaces, i.e., according to the first parking space-position information and the first vehicle-position information, planning a first parking path corresponding to the available parking space; and if the planning of the first parking path succeeds, determining the available parking space as the candidate parking space, recording the first vehicle-position information as a buffer point, and recording the first parking path as a memorized parking path.

The embodiment of the present disclosure can, according to the deviation between the first parking space-position information and the second parking space-position information that are detected during the travelling of the vehicle, determine whether the environment of the candidate parking space and the condition of the parking path have an emergency, and if an emergency emerges, detect whether the candidate parking space fails, maintain the candidate parking space that is still effective, and delete the failing candidate parking space, which updates in real time the candidate parking space and the memorized parking path that are detected by the vehicle, reduces the probability of failure of automatic parking, and improve the usage experience of automatic parking.

In an example, the method further includes, in the second-time polling, detecting the available parking spaces that have not become a candidate parking space within the parking area, acquiring the second parking space-position information of the available parking spaces that have not become a candidate parking space, and according to the second parking space-position information of the available parking space and the second vehicle-position information, planning the parking path corresponding to the available parking space; and if the planning of the parking path corresponding to the available parking space succeeds, and the candidate parking spaces have not reached a preset quantity, directly determining the available parking space as the candidate parking space, recording the second vehicle-position information as a buffer point, and recording the parking path as the memorized parking path.

The method further includes, if the planning of the parking path corresponding to the available parking space succeeds, and the quantity of the candidate parking spaces has reached the preset quantity, replacing the candidate parking space with the available parking space, wherein a distance between the available parking space and the vehicle is less than a distance between the candidate parking space and the vehicle, recording the second vehicle-position information as a buffer point, and recording the parking path as the memorized parking path.

The embodiment of the present disclosure performs polling and planning again to the available parking spaces that have not become a candidate parking space, determines the preselected candidate parking spaces, compares the preselected candidate parking space with the candidate parking spaces already recorded, determines better candidate parking spaces therefrom, and updates and replaces the candidate parking space in the onboard device, which prevents neglecting the available parking spaces that, because of environmental changes, suddenly can generate a parking path, and enables the vehicle to detect more candidate parking spaces.

In an embodiment of the present disclosure, the candidate parking space is displayed by an onboard device of the vehicle, and after the step of detecting the available parking spaces one by one periodically to determine the candidate parking space, the method further includes: in response to an operation instruction sent from the user to operate the onboard device, determining a target parking space from the candidate parking spaces; acquiring third vehicle-position information of the vehicle and third parking space-position information of the target parking space; and according to the third parking space-position information and the third vehicle-position information, planning a third parking path corresponding to the target parking space, and parking the vehicle according to the third parking path.

Particularly, after the candidate parking space is determined and displayed by the onboard device, the user may select a candidate parking space from the candidate parking spaces displayed by the onboard device as the target parking space, acquire the third vehicle-position information of the vehicle and the third parking space-position information of the target parking space at the current moment, according to the third parking space-position information and the third vehicle-position information, and the target parking space detected by the vehicle and the environmental condition of the path, plan a third parking path corresponding to the target parking space, and park according to the third parking path.

In an embodiment of the present disclosure, the method further includes: if the planning of the third parking path fails, according to the third vehicle-position information, the buffer point and the third parking space-position information, planning a fourth parking path corresponding to the target parking space, and parking the vehicle according to the fourth parking path; and if the planning of the fourth parking path fails, parking the vehicle according to the memorized parking path.

Particularly, the method further includes, after planning the third parking path corresponding to the target parking space, if the planning of the third parking path fails, according to the third vehicle-position information, the buffer point and the third parking space-position information, planning a fourth parking path corresponding to the target parking space, and parking the vehicle according to the fourth parking path; if the planning of the fourth parking path fails, parking the vehicle according to the memorized parking path; and if the parking of the vehicle according to the memorized parking path fails, determining that the target parking space fails and cannot be used to park, deleting the information of the target parking space, and returning to the step of determining the target parking space.

In the embodiment of the present disclosure, after the user has determined the target parking space, the stage of formal planning of the parking path is entered, comprising: firstly, according to the third parking space-position information and the third vehicle-position information that are acquired at the current moment, planning the third parking path for parking; if it fails, planning the fourth parking path according to the buffer point for parking; if it fails, parking the vehicle according to the memorized parking path; and if it fails again, determining that the candidate parking space is un-available. In the embodiment of the present disclosure, after the user has determined the target parking space, multiple parking paths are planned according to the vehicle-position information and the parking space-position information that are acquired at the current moment and the buffer point corresponding to the target parking space, and from them the optimum parking path is selected for parking, which increases the success rate of automatic parking of the vehicle.

In an embodiment of the present disclosure, the first parking space-position information includes a first parking space position and a first course angle, and the memorized parking path is recorded as the first parking space position, the first course angle, a curvature, and a length of the memorized parking path.

Particularly, in the process of recording the parking path as the memorized parking path, the routine path point, for example ∑(*xᵢ*, *yᵢ*, *θᵢ*), is simplified to be a state of multiple five-element sections *Trq*(*x, y, θ, ds, r*) of the parking path. Further, the coordinates and the course angles of each of the points of the path may be obtained by using an estimating algorithm according to a starting point (*x*ₛₜₐᵣₜ, *y*ₛₜₐᵣₜ, *θₛₜₐᵣ*) of the parking path, the curvature of the parking path and length information *Trq*(*ds, r*) of the parking path.

In the embodiment of the present disclosure, the routine path point, for example ∑(*xᵢ*, *yᵢ*, *θᵢ*), is simplified and compressed into the starting point (*x*ₛₜₐᵣₜ, *y*ₛₜₐᵣₜ, *θₛₜₐᵣ*) of the parking path, the curvature of the parking path and the length information of the parking path, which necessarily saves the memory space of the calculating unit.

It should be noted that, in the embodiments of the present disclosure, in the process of determining the candidate parking space, merely one buffer point is recorded, but the present disclosure is not limited thereto. A person skilled in the art may set the recorded buffer points to be two, three or four and so on according to the technical solutions of the present disclosure without paying creative work. For example, assuming that two buffer points are provided, the vehicle-position information in the first-time polling is recorded as the first buffer point, and the vehicle-position information in the second-time polling is recorded as the second buffer point; and subsequently, the vehicle-position information in the third-time polling is updated to be the second buffer point, and the second buffer point is updated to be the first buffer point.

In conclusion, the embodiments of the present disclosure comprise, during travelling of the vehicle, determining the available parking space within the parking area, acquiring first parking space-position information of the available parking space and first vehicle-position information of the vehicle; according to the first parking space-position information and the first vehicle-position information, planning a first parking path corresponding to the available parking space; and if the planning of the first parking path succeeds, determining the available parking space as the candidate parking space, recording the first vehicle-position information as a buffer point, and recording the first parking path as a memorized parking path. The embodiment of the present disclosure can, according to the deviation between the first parking space-position information and the second parking space-position information that are detected during the travelling of the vehicle, determine whether the environment of the candidate parking space and the condition of the parking path have an emergency, and if an emergency emerges, detect whether the candidate parking space fails, maintain the candidate parking space that is still effective, and delete the failing candidate parking space, which updates in real time the candidate parking space and the memorized parking path that are detected by the vehicle, reduces the probability of failure of automatic parking, and improve the usage experience of automatic parking.

The embodiment of the present disclosure performs polling and planning again to the available parking spaces that have not become a candidate parking space, determines the preselected candidate parking spaces, compares the preselected candidate parking space with the candidate parking spaces already recorded, determines better candidate parking spaces therefrom, and updates and replaces the candidate parking space in the onboard device, which prevents neglecting the available parking spaces that, because of environmental changes, suddenly can generate a parking path, and enables the vehicle to detect more candidate parking spaces.

In the embodiment of the present disclosure, after the user has determined the target parking space, multiple parking paths are planned according to the vehicle-position information and the parking space-position information that are acquired at the current moment and the buffer point corresponding to the target parking space, and from them the optimum parking path is selected for parking, which increases the success rate of automatic parking of the vehicle.

In the embodiment of the present disclosure, the routine path point, for example ∑(*xᵢ*, *yᵢ*, *θᵢ*), is simplified and compressed into the starting point (*x*ₛₜₐᵣₜ, *y*ₛₜₐᵣₜ, *θₛₜₐᵣₜ*) of the parking path, the curvature of the parking path and the length information of the parking path, which necessarily saves the memory space of the calculating unit.

It should be noted that, regarding the process embodiments, for brevity of the description, all of them are expressed as the combination of a series of actions, but a person skilled in the art should know that the embodiments of the present disclosure are not limited by the sequences of the actions that are described, because, according to the embodiments of the present disclosure, some of the steps may have other sequences or be performed simultaneously. Secondly, a person skilled in the art should also know that all of the embodiments described in the description are preferable embodiments, and not all of the actions that they involve are required by the embodiments of the present disclosure.

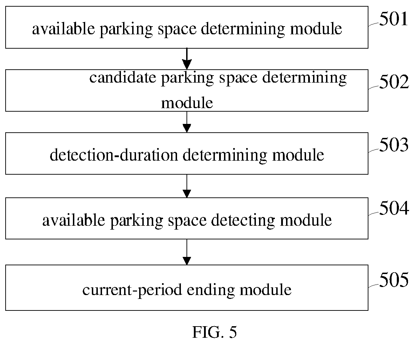

Referring to FIG. 5, FIG. 5 shows a structural block diagram of an embodiment of the apparatus of automatic parking of a vehicle according to the present disclosure. In an embodiment of the present disclosure, the vehicle has a corresponding parking area, and may particularly comprise the following modules:
an available parking space determining module 501 configured for, during travelling of the vehicle, determining available parking spaces within a parking area of the vehicle;
a candidate-parking space determining module 502 configured for detecting the available parking spaces one by one periodically to determine a candidate parking space;
a detection-duration determining module 503 configured for, after the detection on the available parking space has been completed within a current period, determining a detection duration;
an available parking space detecting module 504 configured for, if the detection duration is less than a preset duration, continuing detecting a next available parking space within the current period; and
a current-period ending module 505 configured for, if the detection duration is greater than or equal to the preset duration, after the current period ends, starting a next period, to continue detecting a next available parking space.

In an embodiment of the present disclosure, the candidate-parking space determining module 502 includes:
a position-information acquiring submodule configured for acquiring first parking space-position information of the available parking space and first vehicle-position information of the vehicle;
a parking-path planning submodule configured for, according to the first parking space-position information and the first vehicle-position information, planning a first parking path corresponding to the available parking space; and
a parking-path memorizing submodule configured for, if the planning of the first parking path succeeds, determining the available parking space as the candidate parking space, recording the first vehicle-position information as a buffer point, and recording the first parking path as a memorized parking path.

In an embodiment of the present disclosure, the apparatus further includes:
a first position-information acquiring module configured for acquiring second parking space-position information of the candidate parking space and second vehicle-position information of the vehicle, wherein the second parking space-position information includes a second parking space entrance width;
an entrance-width determining module configured for determining whether a difference between the first parking space entrance width and the second parking space entrance width is less than a preset threshold; and
a candidate-parking space maintaining module configured for, if the difference between the first parking space entrance width and the second parking space entrance width is less than the preset threshold, maintaining the candidate parking space.

In an embodiment of the present disclosure, after the entrance-width determining module, the apparatus further includes:
a parking-path checking module configured for, if the difference between the first parking space entrance width and the second parking space entrance width is greater than or equal to the preset threshold, checking the memorized parking path, and if the memorized parking path is effective, maintaining the candidate parking space;
a first parking-path planning module configured for, if the memorized parking path fails, according to the buffer point and the second parking space-position information of the candidate parking space, planning a second parking path corresponding to the candidate parking space;
a parking-path memorizing module configured for, if the planning of the second parking path corresponding to the candidate parking space succeeds, maintaining the candidate parking space, and recording the second parking path as the memorized parking path; and
a candidate-parking space deleting module configured for, if the planning of the second parking path corresponding to the candidate parking space fails, deleting the candidate parking space, using the candidate parking space as the available parking space, using the second parking space-position information as the first parking space-position information, using the second vehicle-position information as the first vehicle-position information, and returning to execute the step of, according to the first parking space-position information and the first vehicle-position information, planning the first parking path corresponding to the available parking space.

In an embodiment of the present disclosure, the candidate parking space is displayed by an onboard device of the vehicle, the apparatus further includes:
a target-parking space determining module configured for, in response to an operation instruction sent from the user to operate the onboard device, determining a target parking space from the candidate parking spaces;
a second position-information acquiring module configured for acquiring third vehicle-position information of the vehicle and third parking space-position information of the target parking space; and
a second parking-path planning module configured for, according to the third parking space-position information and the third vehicle-position information, planning a third parking path corresponding to the target parking space, and parking the vehicle according to the third parking path.

In an embodiment of the present disclosure, the apparatus further includes:
a third parking-path planning module configured for, if the planning of the third parking path fails, according to the third vehicle-position information, the buffer point and the third parking space-position information, planning a fourth parking path corresponding to the target parking space, and parking the vehicle according to the fourth parking path; and
a memorized-parking-path parking module configured for, if the planning of the fourth parking path fails, parking the vehicle according to the memorized parking path.

In an embodiment of the present disclosure, the first parking space-position information includes a first parking space position and a first course angle, and the memorized parking path is recorded as the first parking space position, the first course angle, a curvature, and a length of the memorized parking path.

In conclusion, the embodiments of the present disclosure comprise, during travelling of the vehicle, determining the available parking space within the parking area, detecting the available parking spaces one by one periodically to determine a candidate parking space; after the detection on the available parking space has been completed within a current period, determining a detection duration; if the detection duration is less than a preset duration, continuing detecting a next available parking space within the current period; and if the detection duration is greater than or equal to the preset duration, after the current period ends, starting a next period, to continue detecting a next available parking space. The embodiments of the present disclosure, by determining the detection duration in the detection on the available parking space, and, when the detection duration is less than the preset duration, continuing detecting the next available parking space within the current period, can reduce the duration of the detection on the available parking space, and detect more available parking spaces within equal duration, to prevent the available candidate parking space from being seized by another vehicle due to the waste of the detection duration, to bring an excellent parking experience to the user.

Regarding the device embodiments, because they are substantially similar to the process embodiments, they are described simply, and the related parts may refer to the description on the process embodiments.

An embodiment of the present disclosure discloses a vehicle, wherein the vehicle includes a processor, a memory and a computer program that is stored in the memory and is executable in the processor, and the computer program, when executed by the processor, implements the steps of the embodiment of the method of automatic parking of a vehicle stated above.

An embodiment of the present disclosure discloses a computer-readable storage medium, wherein the computer-readable storage medium stores a computer program, and the computer program, when executed by a processor, implements the steps of the embodiment of the method of automatic parking of a vehicle stated above.

The embodiments of the description are described in the mode of progression, each of the embodiments emphatically describes the differences from the other embodiments, and the same or similar parts of the embodiments may refer to each other.

A person skilled in the art should understand that the embodiments of the present disclosure may be provided as a method, a device, or a computer program product. Therefore, the embodiments of the present disclosure may take the form of a complete hardware embodiment, a complete software embodiment, or an embodiment combining software and hardware. Furthermore, the embodiments of the present disclosure may take the form of a computer program product implemented on one or more computer-usable storage media (including but not limited to a disk storage, a CD-ROM, an optical memory and so on) containing a computer-usable program code therein.

The embodiments of the present disclosure are described with reference to the flow charts and/or block diagrams of the method, the terminal device (system), and the computer program product according to the embodiments of the present disclosure. It should be understood that each flow and/or block in the flow charts and/or block diagrams, and combinations of the flows and/or blocks in the flow charts and/or block diagrams, may be implemented by a computer program instruction. The computer program instructions may be provided to a processor of a general-purpose computer, a special-purpose computer, an embedded processor, or another programmable data processing terminal device to generate a machine, so that a device for implementing the functions specified in one or more flows of the flow charts and/or one or more blocks of the block diagrams can be generated by instructions executed by the processor of the computers or the other programmable data processing terminal device.

The computer program instructions may also be stored in a computer-readable memory that can instruct the computers or the other programmable data processing terminal device to operate in a specific mode, so that the instructions stored in the computer-readable memory generate an article comprising an instruction device, and the instruction device implements the functions specified in one or more flows of the flow charts and/or one or more blocks of the block diagrams.

The computer program instructions may also be loaded to the computers or the other programmable data processing terminal device, so that the computers or the other programmable data processing terminal device implement a series of operation steps to generate the computer-implemented processes, whereby the instructions executed in the computers or the other programmable data processing terminal device provide the steps for implementing the functions specified in one or more flows of the flow charts and/or one or more blocks of the block diagrams.

Although preferable embodiments of the embodiments of the present disclosure have been described, once a person skilled in the art has known the essential inventive concept, he may make further variations and modifications on those embodiments. Therefore, the appended claims are intended to be interpreted as including the preferable embodiments and all of the variations and modifications that fall within the scope of the embodiments of the present disclosure.

Finally, it should also be noted that, in the present text, relation terms such as first and second are merely intended to distinguish one entity or operation from another entity or operation, and that does not necessarily require or imply that those entities or operations have therebetween any such actual relation or order. Furthermore, the terms "include", "comprise" or any variants thereof are intended to cover non-exclusive inclusions, so that processes, methods, articles or terminal devices that include a series of elements do not only include those elements, but also include other elements that are not explicitly listed, or include the elements that are inherent to such processes, methods, articles or terminal devices. Unless further limitation is set forth, an element defined by the wording "comprising a ..." does not exclude additional same element in the process, method, article or terminal device comprising the element.

The method and apparatus of automatic parking of the vehicle, the vehicle and the storage medium according to the present disclosure have been described in detail above. The principle and the embodiments of the present disclosure are described herein with reference to the particular examples, and the description of the above embodiments is merely intended to facilitate to understand the method according to the present disclosure and its core concept. Moreover, for a person skilled in the art, according to the concept of the present disclosure, the particular embodiments and the range of application may be varied. In conclusion, the contents of the description should not be understood as limiting the present disclosure.

## Claims

1. A method of automatic parking of a vehicle, **characterized in that**, the method comprises:
during travelling of the vehicle, determining available parking spaces within a parking area of the vehicle;
detecting the available parking spaces one by one periodically to determine a candidate parking space;
after the detection on the available parking spaces has been completed within a current period, determining a detection duration;
if the detection duration is less than a preset duration, continuing detecting a next available parking space within the current period; and
if the detection duration is greater than or equal to the preset duration, after the current period ends, starting a next period, to continue detecting a next available parking space.

2. The method according to claim 1, **characterized in that**, the step of detecting the available parking spaces one by one periodically to determine the candidate parking space comprises:
acquiring first parking space-position information of the available parking space and first vehicle-position information of the vehicle;
according to the first parking space-position information and the first vehicle-position information, planning a first parking path corresponding to the available parking space; and
if the planning of the first parking path succeeds, determining the available parking space as the candidate parking space, recording the first vehicle-position information as a buffer point, and recording the first parking path as a memorized parking path.

3. The method according to claim 2, **characterized in that**, the first parking space-position information comprises a first parking space entrance width, and after the step of detecting the available parking spaces one by one periodically to determine the candidate parking space, the method further comprises:
acquiring second parking space-position information of the candidate parking space and second vehicle-position information of the vehicle, wherein the second parking space-position information comprises a second parking space entrance width;
determining whether a difference between the first parking space entrance width and the second parking space entrance width is less than a preset threshold; and
if the difference between the first parking space entrance width and the second parking space entrance width is less than the preset threshold, maintaining the candidate parking space.

4. The method according to claim 3, **characterized in that**, after the step of determining whether the difference between the first parking space entrance width and the second parking space entrance width is less than the preset threshold, the method further comprises:
if the difference between the first parking space entrance width and the second parking space entrance width is greater than or equal to the preset threshold, checking the memorized parking path, and if the memorized parking path is effective, maintaining the candidate parking space;
if the memorized parking path fails, according to the buffer point and the second parking space-position information of the candidate parking space, planning a second parking path corresponding to the candidate parking space;
if the planning of the second parking path corresponding to the candidate parking space succeeds, maintaining the candidate parking space, and recording the second parking path as the memorized parking path; and
if the planning of the second parking path corresponding to the candidate parking space fails, deleting the candidate parking space, using the candidate parking space as the available parking space, using the second parking space-position information as the first parking space-position information, using the second vehicle-position information as the first vehicle-position information, and returning to execute the step of, according to the first parking space-position information and the first vehicle-position information, planning the first parking path corresponding to the available parking space.

5. The method according to any one of claims 2 to 4, **characterized in that**, the candidate parking space is displayed by an onboard device of the vehicle, and after the step of detecting the available parking spaces one by one periodically to determine the candidate parking space, the method further comprises:
in response to an operation instruction sent from the user to operate the onboard device, determining a target parking space from the candidate parking spaces;
acquiring third vehicle-position information of the vehicle and third parking space-position information of the target parking space; and
according to the third parking space-position information and the third vehicle-position information, planning a third parking path corresponding to the target parking space, and parking the vehicle according to the third parking path.

6. The method according to claim 5, **characterized in that**, the method further comprises:
if the planning of the third parking path fails, according to the third vehicle-position information, the buffer point and the third parking space-position information, planning a fourth parking path corresponding to the target parking space, and parking the vehicle according to the fourth parking path; and
if the planning of the fourth parking path fails, parking the vehicle according to the memorized parking path.

7. The method according to claim 2 or 3 or 4 or 6, **characterized in that**, the first parking space-position information comprises a first parking space position and a first course angle, and the memorized parking path is recorded as the first parking space position, the first course angle, a curvature, and a length of the memorized parking path.

8. An apparatus of automatic parking of a vehicle, **characterized in that**, the apparatus comprises:
an available parking space determining module configured for, during travelling of the vehicle, determining available parking spaces within a parking area of the vehicle;
a candidate-parking space determining module configured for detecting the available parking spaces one by one periodically to determine a candidate parking space;
a detection-duration determining module configured for, after the detection on the available parking space has been completed within a current period, determining a detection duration;
an available parking space detecting module configured for, if the detection duration is less than a preset duration, continuing detecting a next available parking space within the current period; and
a current-period ending module configured for, if the detection duration is greater than or equal to the preset duration, after the current period ends, starting a next period, to continue detecting a next available parking space.

9. The apparatus according to claim 8, **characterized in that**, the candidate-parking space determining module comprises:
a position-information acquiring submodule configured for acquiring first parking space-position information of the available parking space and first vehicle-position information of the vehicle;
a parking-path planning submodule configured for, according to the first parking space-position information and the first vehicle-position information, planning a first parking path corresponding to the available parking space; and
a parking-path memorizing submodule configured for, if the planning of the first parking path succeeds, determining the available parking space as the candidate parking space, recording the first vehicle-position information as a buffer point, and recording the first parking path as a memorized parking path.

10. The apparatus according to claim 9, **characterized in that**, the apparatus further comprises:
a first position-information acquiring module configured for acquiring second parking space-position information of the candidate parking space and second vehicle-position information of the vehicle, wherein the second parking space-position information comprises a second parking space entrance width;
an entrance-width determining module configured for determining whether a difference between the first parking space entrance width and the second parking space entrance width is less than a preset threshold; and
a candidate-parking space maintaining module configured for, if the difference between the first parking space entrance width and the second parking space entrance width is less than the preset threshold, maintaining the candidate parking space.

11. The apparatus according to claim 10, **characterized in that**, the apparatus further comprises:
a parking-path checking module configured for, if the difference between the first parking space entrance width and the second parking space entrance width is greater than or equal to the preset threshold, checking the memorized parking path, and if the memorized parking path is effective, maintaining the candidate parking space;
a first parking-path planning module configured for, if the memorized parking path fails, according to the buffer point and the second parking space-position information of the candidate parking space, planning a second parking path corresponding to the candidate parking space;
a parking-path memorizing module configured for, if the planning of the second parking path corresponding to the candidate parking space succeeds, maintaining the candidate parking space, and recording the second parking path as the memorized parking path; and
a candidate-parking space deleting module configured for, if the planning of the second parking path corresponding to the candidate parking space fails, deleting the candidate parking space, using the candidate parking space as the available parking space, using the second parking space-position information as the first parking space-position information, using the second vehicle-position information as the first vehicle-position information, and returning to execute the step of, according to the first parking space-position information and the first vehicle-position information, planning the first parking path corresponding to the available parking space.

12. A vehicle, **characterized in that** the vehicle comprises a processor, a memory and a computer program that is stored in the memory and is executable in the processor, and the computer program, when executed by the processor, implements the steps of the method of automatic parking of a vehicle according to any one of claims 1 to 7.

13. A computer-readable storage medium, **characterized in that** the computer-readable storage medium stores a computer program, and the computer program, when executed by a processor, implements the steps of the method of automatic parking of a vehicle according to any one of claims 1 to 7.
